# EUROPEAN PATENT APPLICATION

(11) **EP 4 517 547 A1**
(43) Date of publication of application: **05.03.2025**
(21) Application number: 23020413.3
(22) Date of filing: 31.08.2023
(51) Int. Cl.: G06F 16/21

(54) **INTELLIGENT TABULAR DATA MANAGEMENT SYSTEM UTILIZING LANGUAGE MODELS AND METHOD THEREOF**

(71) Applicant: Man, Arina, 6300 Zug (CH)
(72) Inventor: Man, Arina, 6340 Baar (CH); Korol, Oleg, OT 7770232 Ashdod (IL)

(57) **Abstract**

The present invention aims to provide an intelligent system for managing tabular data, leveraging Language Models and Retrieval-Augmented Generation architecture. The system is designed to automate complex data cleaning tasks, including data synchronization, extraction, validation, and secure on-premise operation across various industries.

## Description

### TECHNICAL FIELD

The present invention relates generally to the field of data management and specifically to the automation of data cleaning processes. It encompasses the utilization of Language Models and Retrieval-Augmented Generation (RAG) architecture to intelligently synchronize, extract, validate, and manipulate tabular data.

### BACKGROUND

Large Language Models (LLMs) are widely used today. From the state of the art, different applications are well-known. For example, describes

From the state of the art, different methods of relevant data processing are well-known. For example, US20230259705A1 describes a method of interacting with a large language model, including the step of a processing system using a structured, machine-readable representation of data that conforms to a machine-readable language, such as a universal language, to provide new context data for the LLM, in order to improve the output, such as continuation text output, generated by the LLM in response to a prompt; and such as a method of interacting with a LLM, including the step of providing continuation data generated by the LLM to a processing system that uses a structured, machine-readable representation of data that conforms to a machine-readable language, such as a universal language, in which the processing system is configured to analyse the continuation output generated by the LLM in response to a prompt to enable an improved version of that continuation output to be provided to a user. Related computer systems are provided.

US20230245234A1 discloses an optimization system comprising a self-learning and contextual AI (Artificial Intelligence) assistant built using large language models that has been integrated to execute, generate usable content on the accessible data, guide, and interact with user through the entire projection and decision planning process using voice and chat.

In contrast to the state of the art, the present invention addresses the complex and often error-prone task of data cleaning, which requires both common sense and in-depth knowledge of generally known data. By automating this process, the system offers a robust solution for industries that work with tabular data, including but not limited to E-commerce, banking, military, healthcare, and finance.

Further areas of applicability of the present disclosure will become apparent from the detailed description, the claims and the drawings. The detailed description and specific examples are intended for purposes of illustration only and are not intended to limit the scope of the disclosure.

### SUMMARY OF THE INVENTION

The present invention aims to provide an intelligent system for managing tabular data, leveraging Language Models and Retrieval-Augmented Generation architecture. The system is designed to automate complex data cleaning tasks, including data synchronization, extraction, validation, and secure on-premise operation across various industries.

The invention consists of five key components:
- a RAG Machine: A physical computer that serves as an interface between the user and the other parts of the system. It accepts commands from the user and coordinates with the LLM and other components.
- a Data Storage Machines: These machines host various types of databases, allowing data manipulation through SQL and other programming languages. They also include a code interpreter for executing programs as needed.
- a File Storage: A dedicated machine with extensive storage capacity for handling files such as CSVs, enabling direct manipulation of these files.
- a LLM Machine: A high-performance multi-GPU machine that runs the LLM, providing the intelligence needed for complex data cleaning tasks.
- a Backups Machine: A machine that maintains previous versions of the data, allowing users to roll back changes if necessary.

The system can be implemented on a single machine or distributed across multiple machines.

Various other purposes and advantages of the invention will become clear from its description in the specification that follows and from the novel features particularly pointed out in the appended claims. Therefore, to the accomplishment of the objectives described above, this invention consists of the features hereinafter illustrated in the drawings, fully described in the detailed description of the preferred embodiments and particularly pointed out in the claims. However, such drawings and description disclose only some of the various ways in which the invention may be practiced.

### DETAILED DESCRIPTION

Certain embodiments commensurate in scope with the originally claimed subject matter are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

According to a preferred embodiment of the invention, an intelligent tabular data management system utilizing language models for synchronization, extraction, validation, and secure on-premise operation in diverse industries consists of key components:
- a RAG Machine;
- a plurality of Data Storage Machines;
- a File Storage;
- a LLM Machine;
- a Backups Machine.

These components can be implemented on a single machine or distributed across multiple machines, providing flexibility in deployment.

The Data Storage Machines host various types of databases, including SQL, NoSQL, and others, allowing data manipulation through different programming languages. A code interpreter is included to execute programs as needed, providing flexibility in handling different data processing tasks.

The File Storage is a dedicated machine with extensive storage capacity is provided for handling files such as CSVs, JSON, XML, and Excel. This enables direct manipulation of these files, facilitating efficient data retrieval and processing.

The LLM Machine is a high-performance multi-GPU machine runs the LLM, providing the intelligence needed for complex data cleaning tasks. The LLM is capable of understanding and processing multiple languages, making the system versatile and globally applicable.

The Backups Machine is a machine that maintains previous versions of the data allows users to roll back changes if necessary. This ensures data integrity and provides a safety net against potential errors or undesired modifications

According to the preferred embodiment of the invention, the system includes the following modules:
- a Data Synchronization Module;
- a Data Extraction Module;
- a Data Validation Module.

The LLM serves as the interface of the system, accessible via command line or free text. Customizable workflows, including prompt history and prompt macros, enhance user interaction and allow tailored solutions.

According to the preferred embodiment of the invention, the system provides users with the following algorithms and processes:
- a Data Cleaning Algorithm;
- a Data Retrieval Algorithm.

The system employs the sophisticated data cleaning algorithm that integrates data synchronization, extraction, and validation. It leverages the LLM's natural language understanding to automate tasks that traditionally require human intervention.

The high-speed data retrieval algorithm ensures efficient data transfer between machines. Combined with large, high-performance storage capabilities, this enables reasonable data retrieval speed, even for large datasets.

The RAG architecture facilitates the interaction between the LLM and other components, translating user commands into actionable tasks. It serves as a bridge, ensuring seamless communication and execution within the system.

The system supports specific data formats, including but not limited to CSV, SQL, JSON, XML, and Excel.

Optimal performance requires GPU servers to run the LLM, high-speed network connections for data transfer between machines, and large, high-performance storage capabilities to ensure reasonable data retrieval speed.

Additional machines will be needed to run larger systems, affecting scalability.

The system may support as many languages as possible within the LLM itself.

The system offers user-customizable workflows, including features like prompt history and prompt macros, allowing tailored solutions for specific industry applications.

The system is designed to seamlessly integrate with existing databases and file systems, enhancing compatibility and ease of use.

The LLM serves as the interface of the system, accessible via command line or free text, focusing on user-friendly interaction.

The system has the ability to process data in real-time or near-real-time.

Collaboration tools are available for team-based data cleaning and management.

Integration with advanced analytics, machine learning tools, and mathematical modules for further data analysis is an optional feature.

The ability to add custom plugins or extensions to enhance functionality or integrate with other tools is provided.

The system offers real-time data processing, collaborative tools, advanced analytics, mathematical modules, and custom plugins or extensions. These optional features enhance functionality and provide additional capabilities as needed.

While only certain features and embodiments of the disclosure have been illustrated and described, many modifications and changes may occur to those skilled in the art without materially departing from the novel teachings and advantages of the subject matter recited in the claims. The order or sequence of any process or method steps may be varied or re-sequenced according to alternative embodiments. It is, therefore, to be understood that the appended claims are intended to cover all such modifications and changes as fall within the true spirit of the disclosed embodiments. Furthermore, in an effort to provide a concise description of the exemplary embodiments, all features of an actual implementation may not have been described. It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. An intelligent tabular data management system, comprising:
- a retrieval-augmented generation (RAG) machine;
- a plurality of data storage machines;
- a file storage;
- a language model machine (LLM);
- a backups machine;
- a computer-readable program code configured to receive user commands via the RAG machine;
- a computer-readable program code configured to interpret the commands using the LLM;
- a computer-readable program code configured to coordinate with the plurality of data storage machines to access various types of databases;
- a computer-readable program code configured to handle specific data formats;
- a computer-readable program code configured to utilize a high-performance multi-GPU configuration to provide intelligence for data cleaning tasks;
- a computer-readable program code configured to maintain previous versions of the data through the backup machine;
- a computer-readable program code configured to unify scattered data across different sources using a data synchronization module of the system;
- a computer-readable program code configured to extract information from free-form texts using a data extraction module of the system;
- a computer-readable program code configured to review and correct data parameters using a data validation module of the system.

2. The system of claim 1, wherein the computer program product is executable by a processor to perform a method for managing tabular data.

3. A computer-implemented method for managing tabular data, comprising:
receiving user commands via a Retrieval-Augmented Generation (RAG) machine;
interpreting the commands using a Language Model (LLM);
coordinating with a plurality of data storage machines to access various types of databases;
handling specific data formats;
utilizing a high-performance multi-GPU configuration to provide intelligence for data cleaning tasks;
maintaining previous versions of the data through a backup machine;
unifying scattered data across different sources using a data synchronization module;
extracting information from free-form texts using a data extraction module;
reviewing and correcting data parameters using a data validation module.

4. The method of claim 3, wherein the data synchronization module recognizing columns representing the same information and creates a merging algorithm automatically.

5. The method of claim 3, wherein the data validation module using specific descriptions or common-sense logic to identify and correct incorrect data parameters.

6. The method of claim 3, further comprising the step of providing a user interface accessible via command line or free text, and customizable workflows including prompt history and prompt macros.

7. The method of claim 3, further comprising ensuring efficient data transfer between machines through a high-speed data retrieval algorithm.

8. The method of claim 3, wherein the LLM supporting multiple languages.

9. The method of claim 3, further comprising implementing optional features including real-time data processing, collaborative tools, advanced analytics, mathematical modules, and custom plugins or extensions.

10. The method of claim 3, further comprising rolling back changes using the backup machine if necessary.

11. The method of claim 3, further comprising integrating with existing databases and file systems.
